# EUROPÄISCHE PATENTANMELDUNG

(11) **EP 4 846 854 A1**
(43) Veröffentlichungstag der Anmeldung: **02.12.2026**
(21) Anmeldenummer: 25178893.1
(22) Anmeldetag: 26.05.2025
(51) Int. Cl.: A23G 3/34, A23G 3/26, A23P 20/13

(54) **VERFAHREN ZUR HERSTELLUNG EINES EINE ISOMALTULOSE-HALTIGE DRAGIERDECKE AUFWEISENDEN SÜSSWARENPRODUKTES**

(71) Anmelder: Südzucker AG, 68165 Mannheim (DE)
(72) Erfinder: Die Erfindernennung liegt noch nicht vor
(74) Vertreter: Gleiss Große Schrell und Partner mbB

(57) **Zusammenfassung**

Die vorliegende Erfindung betrifft Verfahren zur Herstellung eines eine Isomaltulose-haltige Dragierdecke aufweisenden Süßwarenproduktes sowie die aus diesem Verfahren erhaltenen Produkte, insbesondere ein eine Isomaltulose-haltige Dragierdecke aufweisendes Süßwarenprodukt.

## Beschreibung

Die vorliegende Erfindung betrifft Verfahren zur Herstellung eines eine Isomaltulose-haltige Dragierdecke aufweisenden Süßwarenproduktes sowie die aus diesem Verfahren erhaltenen Produkte, insbesondere ein eine Isomaltulose-haltige Dragierdecke aufweisendes Süßwarenprodukt.

Das Dragieren von Süßwarenprodukten unter Verwendung von Zuckern oder Zuckeralkoholen ist zum Beispiel aus der WO2004/028262 A1 bekannt. WO2024/023143 A1 offenbart vorverkleisterte, in klassischen Dragierverfahren hergestellte Isomaltulose-haltige Dragierdecken von Kaugummis.

Die in diesen Dokumenten beschriebenen klassischen Dragierverfahren umfassen im Wesentlichen das Durchführen von multiplen Zyklen von jeweils in der Regel drei sukzessiv durchgeführten Verfahrensschritten, nämlich erstens das Aufbringen der Dragierlösung auf einen Süßwarenkern, das Verteilen der Dragierlösung auf dem Kern und das anschließende Kristallisieren und Trocknen der Dragierlösung auf dem Kern. Jeder einzelne dieser Zyklen führt zur Ausbildung einer Dragierschicht und die Vielzahl der durchgeführten Zyklen dann zur Ausbildung einer Dragierdecke, die aus mehreren übereinander angeordneten Dragierschichten aufgebaut ist. Diese Verfahren sind zeit-, energie- und dementsprechend auch kostenaufwendig. Darüber hinaus sind die Verfahren aufgrund der Vielzahl unterschiedlicher aufeinander abgestimmter Verfahrensschritte störanfällig. Darüber hinaus besteht im Markt ein ständiger Bedarf nach dragierten Produkten, die eine verbesserte Knusprigkeit, insbesondere der Dragierdecke, beim Verzehr ("crunchiness") aufweisen.

Der vorliegenden Erfindung liegt somit das technische Problem zugrunde, Verfahren bereitzustellen, die die vorgenannten Nachteile überwinden, insbesondere die es erlauben, besonders schnell, kostengünstig, störunanfällig und effizient eine Isomaltulose-haltige Dragierdecke aufweisende Süßwarenprodukte herzustellen, wobei sich die erhaltenen Produkte vorteilhafterweise möglichst auch durch eine verbesserte Knusprigkeit der Dragierdecke auszeichnen.

Die vorliegende Erfindung löst das ihr zugrunde liegende technische Problem durch die Bereitstellung der Lehren der unabhängigen Ansprüche, der abhängigen Ansprüche und der Beschreibung.

Die vorliegende Erfindung betrifft daher ein Verfahren zur Herstellung eines eine Dragierdecke aufweisenden Süßwarenprodukts, umfassend die folgenden Verfahrensschritte:
a) Bereitstellen mindestens eines Süßwarenkerns in einem bewegbaren Dragierbehälter und einer in einem Vorlagebehälter befindlichen Isomaltulose-haltigen Dragierlösung und
b) kontinuierliches Einsprühen der Isomaltulose-haltigen Dragierlösung aus dem Vorlagebehälter in einen ersten Bereich des in Bewegung versetzten Dragierbehälters unter gleichzeitiger räumlich getrennter kontinuierlicher Zufuhr von gasförmigen Trocknungsmedium in einen zweiten Bereich des Dragierbehälters, so dass auf dem mindestens einen Süßwarenkern unter einem Massenzuwachs des mindestens einen Süßwarenkerns von mindestens 5 Massen-% (bezogen auf Gesamtmasse des dragierten Süßwarenprodukts) eine Dragierdecke ausgebildet wird.

Bevorzugt werden eine Mehrzahl, insbesondere eine Vielzahl von Süßwarenkernen gleichzeitig der Verfahrensabfolge a) und b) unterzogen.

Erfindungsgemäß ist vorgesehen, dass in einem ersten Verfahrensschritt a) in einem Vorlagebehälter, vorzugsweise mit gegenüber Raumtemperatur erhöhter Temperatur und unter mechanischer Agitation, Isomaltulose-haltige Dragierlösung und in einem Dragierbehälter, insbesondere Dragierkessel, mindestens ein Süßwarenkern, insbesondere eine Vielzahl von Süßwarenkernen vorgelegt werden.

In einem zweiten Verfahrensschritt b) wird die Isomaltulose-haltige Dragierlösung aus dem Vorlagebehälter entnommen und kontinuierlich in den Dragierbehälter, insbesondere in einen ersten Bereich des Dragierbehälters, eingesprüht.

Der Dragierbehälter wird vorzugsweise bereits in Verfahrensschritt a), optional erst in Verfahrensschritt b), in Bewegung versetzt, insbesondere in Rotation versetzt. Die Rotation des

Dragierbehälters führt auch zur Bewegung, insbesondere eine sich um die Drehachse des Dragierbehälters geführte Bewegung, der Süßwarenkerne in dem Dragierbehälter.

Das Einsprühen der Dragierlösung kann in bevorzugter Ausführung mittels einer dem Dragierbehälter zugeordneten Sprühvorrichtung erfolgen, die bevorzugt ein Zuleitungssystem aus dem Vorlagebehälter, mindestens eine Sprühdüse, ein Druckluft- oder Pumpensystem sowie vorzugweise ein Filtrationssystem, Heizsystem und/oder Steuerungssystem aufweist. In besonders bevorzugter Ausführungsform ist vorgesehen, dass das Zuleitungssystem mindestens eine Flachkegeldüse oder Vollkegeldüse, vorzugsweise Flachkegeldüse aufweist.

In Verfahrensschritt b) wird gleichzeitig und räumlich von der Zufuhr der Dragierlösung getrennt ein gasförmiges Trocknungsmedium, insbesondere Trocknungsluft, dem Dragierbehälter zugeführt und in einen zweiten Bereich des Dragierbehälters eingeleitet.

Die Zufuhr des gasförmigen Trocknungsmediums kann in bevorzugter Ausführungsform mittels eines dem Dragierbehälter zugeordneten Lüftungssystems erfolgen, das bevorzugt ein Lüfterrad, einen Elektromotor, ein Gehäuse, einen Luftfilter, eine Zuleitungssystem mit optional mindestens einer Düse, eine Heiz- und Kühlsystem und eine Drehzahlregelung aufweist. Das Lüftungssystem kann bevorzugt ein Gebläse sein. Das Zuleitungssystem kann in bevorzugter Ausführungsform eine Zufuhrleitung, zum Beispiel Rundrohr, mit Auslassöffnung oder eine Zufuhrleitung mit Flachkegel- oder Vollkegeldüse sein.

Durch die erfindungsgemäß vorgesehene getrennte Zuführung in getrennte Bereiche des sich bewegenden Dragierbehälters bilden sich in diesem Dragierbehälter zwei räumlich und funktional getrennte Bereiche aus, nämlich ein erster Bereich, hier auch als Auftrags- und Verteilzone bezeichnet, in den die Isomaltulose-haltige Dragierlösung auf die dort vorliegenden Süßwarenkerne aufgesprüht wird, und ein zweiter Bereich, hier auch als Trocknungs- und Kristallisationszone bezeichnet, in den die Trocknungsluft auf die dort vorliegenden Süßwarenkerne geleitet wird.

In bevorzugter Ausführung ist vorgesehen, dass sich der Dragierbehälter relativ zu der Sprühvorrichtung und dem Lüftungssystem bewegt, insbesondere rotiert, insbesondere die Sprühvorrichtung und das Lüftungssystem sich nicht mit dem Dragierbehälter mit bewegen.

Erfindungsgemäß unterscheiden sich die Lokalisationen des ersten und zweiten Bereichs des Dragierbehälters. Der erste Bereich des Dragierbehälters ist ein räumlicher Bereich des Dragierbehälters, in den gezielt die Dragierlösung eingesprüht wird, insbesondere durch entsprechende Ausrichtung von Sprühwinkel und Sprühdüsenabstand zu Dragierbehälter. Durch eine entsprechende räumliche Ausrichtung der mindestens einen Sprühdüse für das Einsprühen der Dragierlösung kann die Dragierlösung in einen räumlich definierten Bereich des Dragierbehälters eingesprüht werden. In besonders bevorzugter Ausführungsform ist vorgesehen, dass der erste Bereich ein flachkegelförmiger Bereich ist.

Das gasförmige Trocknungsmedium wird vorzugsweise über ein Zuleitungssystem eines Lüftungssystems in den Dragierbehälter eingeleitet und kann durch Ausrichtung der Zuleitung und/ oder einer an dieser angeordneten Düse in einen zweiten und damit einen anderen Bereich des Dragierbehälters geführt werden.

Vorzugsweise können die beiden Bereiche einen überlappenden Bereich von höchstens 10 Vol.-% (bezogen auf das gesamte Volumen des ersten und zweiten Bereichs) aufweisen, insbesondere weisen die beiden Bereiche keinen überlappenden Bereich auf.

In besonders bevorzugter Ausführungsform liegt der erste Bereich in dem Bereich des Dragierbehälters, der, sobald der Dragierbehälter in die vorzugsweise vorgesehene Rotation versetzt ist, die geringste Umlaufgeschwindigkeit der enthaltenen Süßwarenkerne aufweist. In besonders bevorzugter Ausführungsform der vorliegenden Erfindung liegt der zweite Bereich in dem Bereich des Dragierbehälters, der, sobald der Dragierbehälter in die vorzugsweise vorgesehene Rotation versetzt ist, die höchste Umlaufgeschwindigkeit der enthaltenen Süßwarenkerne aufweist. Sofern in einer besonders bevorzugten Ausführungsform ein exzentrisch gelagerter Dragierbehälter verwendet wird, befindet sich der erste Bereich in der unmittelbaren Umgebung, das heißt proximal zu der exzentrisch gelagerten Drehachse des Dragierbehälters, während der zweite Bereich distal in entfernteren Bereichen des Dragierbehälters lokalisiert ist.

Die Erfindung sieht ein kontinuierliches Einsprühen der Isomaltulose-haltigen Dragierlösung unter gleichzeitiger räumlich getrennter kontinuierlicher Zufuhr von Trocknungsluft in die beiden räumlich getrennten Bereiche des Dragierbehälters vor, wobei durch die Bewegung des Dragierbehälters und der in diesem Behälter ebenfalls bewegten, insbesondere um die Drehachse des Dragierbehälters bewegten Süßwarenkerne diese alternierend in den ersten Bereich und den zweiten Bereich des Dragierbehälters gelangen, dort mit Dragierlösung benetzt und getrocknet werden ohne dass zwischendurch andere Verfahrensschritte erfolgen. Auf diese Weise wird ohne Unterbrechung dieses Verfahrensschrittes b) eine derartige Menge an Isomaltulose-haltiger Dragierlösung auf die Süßwarenkerne aufgebracht, dass diese vorteilhafterweise einen Massenzuwachs von mindestens 5 Massen-%, vorzugsweise mindestens 10 Massen-%, insbesondere mindestens 15 Massen-%, vorzugsweise mindestens 20 Massen-% (jeweils bezogen auf Gesamtmasse des dragierten Süßwarenproduktes) aufweisen. Erfindungsgemäß ist bevorzugt vorgesehen, dass Verfahrensschritt b) lediglich einmal im Rahmen des erfindungsgemäßen Herstellverfahrens für eine Dragierdecke aufweisende Süßwarenprodukte durchgeführt wird.

Die physikalischen Eigenschaften der Isomaltulose-haltigen Dragierlösung und das erfindungsgemäße Sprühen unter gleichzeitigem Zuführen von gasförmigem Trocknungsmedium, insbesondere Trocknungsluft, und Bewegung der Süßwarenkerne führen zu einer sehr schnellen Kristallisation der Isomaltulose-haltigen Dragierlösung und einer hohen Verdampfungsgeschwindigkeit des Lösungsmittels, insbesondere des Wassers, der Isomaltulose-haltigen Dragierlösung. Diese Vorgehensweise führt in dem Dragierbehälter, bei gleichzeitiger Trockenmediums-, insbesondere Trockenlufteinblasung, zu einer kurzen Prozesszeit für die Dragierung. Die vorliegende Erfindung sieht in Verfahrensschritt b) ein permanentes Aufsprühen der Isomaltulose-haltigen Dragierlösung bei gleichzeitigem Verteilen, Kristallisieren und Trocknen vor, was nicht nur die Prozesszeit deutlich verkürzt, sondern darüber hinaus auch eine besonders störunanfällige Verfahrensweise darstellt.

Die vorliegende Erfindung ist auch deshalb vorteilhaft, weil sie neben den erfindungsgemäß bereitgestellten verfahrensmäßigen Vorteilen, insbesondere der hohen Prozessgeschwindigkeit, insbesondere Dragiergeschwindigkeit, durch das gemeinsame Aufsprühen der Isomaltulose-haltigen Dragierlösung und der Zufuhr, insbesondere Einblasen, des gasförmigen Trocknungsmediums, insbesondere der Trocknungsluft, in kontinuierlicher Weise eine aufgesprühte Dragierdecke erhalten wird, die anders als herkömmliche Dragierdecken keine Schicht-artige Struktur aus einzeln aufgebrachten und separat erkennbaren Dragierschichten, sondern eine einheitliche homogene Struktur aufweist und sich so strukturell vom Stand der Technik unterscheidet. Dieser Unterschied führt - ohne an die Theorie gebunden zu sein - vorteilhafterweise zu einer verbesserten Knusprigkeit (auch als Knackigkeit oder crunchiness bezeichnet) der erfindungsgemäß hergestellten, eine Dragierdecke aufweisenden Süßwarenprodukts, insbesondere deren Dragierdecke, insbesondere von dragierten Erdnüssen, Haselnüssen, Mandeln oder Schokolinsen. Erfindungsgemäß ist die gemäß Verfahrensschritt b) aufgebrachte Dragierdecke die einzige den mindestens einen Süßwarenkern umhüllende Beschichtung.

Die vorliegende Erfindung ist auch deshalb vorteilhaft, weil sie in einem einzigen kontinuierlich durchgeführten kombinierten Sprüh- und Trocknungsschritt (Verfahrensschritt b)) eine einheitlich aufgebaute Dragierdecke bereitstellt, deren Massenanteil an der Gesamtmasse des beschichteten Süßwarenkerns mindestens 5 Massen-% beträgt, insbesondere von 5 bis 65 Massen-%, insbesondere 10 bis 65 Massen-%, insbesondere 15 bis 60 Massen-%, insbesondere 20 bis 60, insbesondere 30 bis 60, insbesondere 40 bis 60 Massen-%, insbesondere 20 bis 50, insbesondere 30 bis 40 Massen-% (bezogen auf Gesamtmasse des Süßwarenkerns) betragen kann.

In einer besonders bevorzugten Ausführungsform wird Verfahrensschritt b) so ausgeführt, dass der Massenzuwachs des mindestens einen Süßwarenkerns mindestens 10, mindestens 15, mindestens 20, mindestens 25, mindestens 30, mindestens 35, mindestens 38, vorzugsweise mindestens 40 Massen-% (bezogen auf Gesamtmasse des dragierten Süßwarenprodukts) beträgt.

In einer besonders bevorzugten Ausführungsform wird Verfahrensschritt b) so ausgeführt, dass das in Verfahrensschritt b) erhaltene dragierte Süßwarenprodukt eine in Verfahrensschritt b) erhaltene Dragierdecke einer Dicke von 100 bis 1500 µm, insbesondere von 300 bis 1500 µm, insbesondere von 400 bis 1300 µm, insbesondere von 500 bis 1200 µm, insbesondere von 550 bis 1100 µm, insbesondere von 550 bis 700 µm aufweist.

In einer besonders bevorzugten Ausführungsform wird Verfahrensschritt b) so ausgeführt, dass das in Verfahrensschritt b) erhaltene dragierte Süßwarenprodukt eine in Verfahrensschritt b) erhaltene Dragierdecke einer Dicke von 300 bis 800 µm aufweist.

In einer bevorzugten Ausführungsform der Erfindung wird Verfahrensschritt b) so durchgeführt, dass 0,1 bis 0,7 g, insbesondere 0,2 bis 0,6 g, insbesondere 0,3 bis 0,5 g Massenzuwachs pro Minute und pro cm² zu beschichtender Oberfläche des mindestens einen Süßwarenkerns erzielt wird.

Die erfindungsgemäß aufgebrachte Dragierdecke kann als Vorbeschichtungsdecke für anschließende weitere Beschichtungsschritte als Farbbeschichtung oder, vorzugsweise alleinige, Dragierdecke, optional aufgebracht auf einer Vorbeschichtungsschicht, eingesetzt werden.

In einer bevorzugten Ausführungsform der Erfindung ist vorgesehen, dass die aufgesprühte Isomaltulose-haltige Dragierlösung einen Trockensubstanzgehalt von 35 bis 70 Massen-%, insbesondere 45 bis 65 Massen-% aufweist.

In einer bevorzugten Ausführungsform der Erfindung ist vorgesehen, dass die aufgesprühte Isomaltulose-haltige Dragierlösung einen Trockensubstanzgehalt von 55 bis 65 Massen-%, insbesondere 55 bis 60 Massen-% aufweist.

In einer besonders bevorzugten Ausführungsform betrifft die vorliegende Erfindung ein vorgenanntes Verfahren, wobei die in Verfahrensschritt a) bereitgestellte Isomaltulose-haltige Dragierlösung allein Isomaltulose und ein Lösungsmittel umfasst.

Bevorzugt ist das Lösungsmittel eine wässrige Lösung, bevorzugt Wasser, bevorzugt demineralisiertes Wasser.

In einer weiteren bevorzugten Ausführungsform ist die Isomaltulose-haltige Dragierlösung eine Lösung von zumindest Isomaltulose und von mindestens einer weiteren Dragierkomponente in einem Lösungsmittel.

In einer weiteren bevorzugten Ausführungsform ist die Isomaltulose-haltige Dragierlösung eine Lösung von zumindest Isomaltulose und von mindestens einer weiteren Dragierzuckerkomponente in einem Lösungsmittel.

In einer besonders bevorzugten Ausführungsform der vorliegenden Erfindung ist die Isomaltulose-haltige Dragierlösung eine wässrige Lösung umfassend ein Isomaltulose-haltiges Gemisch, insbesondere enthaltend Isomaltulose und mindestens eine weitere Dragierzuckerkomponente.

In einer besonders bevorzugten Ausführungsform der vorliegenden Erfindung ist die Isomaltulose-haltige Dragierlösung eine wässrige Lösung umfassend ein Isomaltulose- und Trehalulose-haltiges Gemisch.

In einer bevorzugten Ausführungsform ist die mindestens eine weitere Dragierzuckerkomponente Trehalulose, Isomaltose, Glucose, Fructose, Sacchararose, Isomelezitose oder eine Kombination davon.

In einer besonders bevorzugten Ausführungsform betrifft die vorliegende Erfindung ein vorgenanntes Verfahren, wobei die in Verfahrensschritt a) bereitgestellte Isomaltulose-haltige Dragierlösung einen Isomaltulosegehalt von mindestens 65, mindestens 70, mindestens 75, mindestens 80, mindestens 85, mindestens 90, mindestens 95, mindestens 98, insbesondere mindestens 99 Massen-% (jeweils bezogen auf Gesamttrockenmasse der Isomaltulose-haltigen Dragierlösung) aufweist.

In einer besonders bevorzugten Ausführungsform betrifft die vorliegende Erfindung ein vorgenanntes Verfahren, wobei die in Verfahrensschritt a) bereitgestellte Isomaltulose-haltige Dragierlösung eine wäßrige Isomaltulose- und Trehalulose-haltige Dragierlösung ist, insbesondere eine Isomaltulose- und Trehalulose-haltige Dragierlösung, wobei deren Isomaltulosegehalt von 65,0 bis 98,0, insbesondere von 65,0 bis 95,0, insbesondere von 65,0 bis 90,0, insbesondere von 70,0 bis 90,0, insbesondere von 75,0 bis 88,0, insbesondere von 75,0 bis 85,0 Massen-% und der Trehalulosegehalt von 0,1 bis 35, insbesondere von 0,2 bis 10, insbesondere von 2,0 bis 35,0, insbesondere von 3,0 bis 15,0, insbesondere von 5,0 bis 15,0, insbesondere von 6,5 bis 13,0, insbesondere von 6,0 bis 12,0, insbesondere von 7,0 bis 10,0 Massen-% beträgt (jeweils bezogen auf Gesamttrockenmasse der Isomaltulose- und Trehalulose-haltigen Dragierlösung).

In einer besonders bevorzugten Ausführungsform der vorliegenden Erfindung weist die in Verfahrensschritt a) bereitgestellte Isomaltulose-haltige Dragierlösung, insbesondere Isomaltulose- und Trehalulose-haltige Dragierlösung, Fructose, Glucose, Saccharose, Isomaltose oder Isomelezitose oder eine Mischung von zwei oder mehr davon auf.

In einer besonders bevorzugten Ausführungsform betrifft die vorliegende Erfindung ein vorgenanntes Verfahren, wobei die in Verfahrensschritt a) bereitgestellte Isomaltulose-haltige Dragierlösung eine wäßrige Isomaltulose- und Trehalulose-haltige Dragierlösung ist, wobei deren Isomaltulosegehalt von 65,0 bis 98,0, insbesondere von 65,0 bis 95,0, insbesondere von 65,0 bis 90,0, insbesondere von 70,0 bis 90,0, insbesondere von 75,0 bis 88,0, insbesondere von 75,0 bis 85,0 Massen-% und der Trehalulosegehalt von 0,1 bis 35, insbesondere von 0,2 bis 10, insbesondere von 2,0 bis 35,0, insbesondere von 3,0 bis 15,0, insbesondere von 5,0 bis 15,0, insbesondere von 6,5 bis 13,0, insbesondere von 6,0 bis 12,0, insbesondere von 7,0 bis 10,0 Massen-% beträgt (jeweils bezogen auf Gesamttrockenmasse der Isomaltulose- und Trehalulose-haltigen Dragierlösung), und wobei diese Fructose, Glucose und Saccharose, sowie gegebenenfalls Isomelezitose und Isomaltose aufweist.

In einer besonders bevorzugten Ausführungsform betrifft die vorliegende Erfindung ein vorgenanntes Verfahren, wobei die in Verfahrensschritt a) bereitgestellte Isomaltulose-haltige Dragierlösung eine wäßrige Isomaltulose- und Trehalulose-haltige Dragierlösung ist, wobei deren Isomaltulosegehalt von 65,0 bis 98,0 insbesondere von 65,0 bis 95,0 insbesondere von 65,0 bis 90,0 Massen-%, insbesondere von 70,0 bis 90,0 Massen-%, insbesondere von 75,0 bis 88,0 Massen-%, insbesondere von 75,0 bis 85,0 Massen-% und der Trehalulosegehalt von 0,1 bis 35, insbesondere von 0,2 bis 10, insbesondere von 5,0 bis 15,0 Massen-%, insbesondere von 6,5 bis 13,0 Massen-%, insbesondere von 6,0 bis 12,0 Massen-%, insbesondere von 7,0 bis 10,0 Massen-% beträgt, und wobei diese einen Fructosegehalt von 0,01 bis 4,0 insbesondere von 2,0 bis 4,0 Massen-%, einen Glucosegehalt von 0,01 bis 3.0, insbesondere von 1,0 bis 3,0 Massen-% und einen Saccharosegehalt von 0,01 bis 12,0, insbesondere von 0,1 bis 12,0 Massen-%, insbesondere 0,2 bis 3,0 Massen-% (jeweils bezogen auf Gesamtmasse der Trockensubstanz der Isomaltulose- und Trehalulose-haltigen Dragierlösung), sowie gegebenenfalls Isomelezitose und Isomaltose aufweist.

In einer besonders bevorzugten Ausführungsform betrifft die vorliegende Erfindung ein vorgenanntes Verfahren, wobei die in Verfahrensschritt a) bereitgestellte Isomaltulose-haltige Dragierlösung insgesamt höchstens 2 Massen-% Fructose, Glucose und Saccharose, sowie gegebenenfalls Isomelezitose und Isomaltose aufweist (bezogen auf Gesamtmasse der Trockensubstanz der Isomaltulose-haltigen Dragierlösung).

In einer besonders bevorzugten Ausführungsform betrifft die vorliegende Erfindung ein vorgenanntes Verfahren, wobei die in Verfahrensschritt a) bereitgestellte Isomaltulose-haltige Dragierlösung als einzige Dragierzuckerkomponente, insbesondere als einzige Dragierkomponente, Isomaltulose aufweist.

In einer besonders bevorzugten Ausführungsform betrifft die vorliegende Erfindung ein vorgenanntes Verfahren, wobei die in Verfahrensschritt a) bereitgestellte Isomaltulose-haltige Dragierlösung als einzige Dragierzuckerkomponente, insbesondere als einzige Dragierkomponente, Isomaltulose und Trehalulose aufweist.

In einer besonders bevorzugten Ausführungsform betrifft die vorliegende Erfindung ein vorgenanntes Verfahren, wobei die in Verfahrensschritt a) bereitgestellte Isomaltulose-haltige Dragierlösung als einzige Dragierzuckerkomponente, insbesondere als einzige Dragierkomponente, Isomaltulose, Trehalulose und mindestens einen Zucker ausgewählt aus der Gruppe bestehend aus Fructose, Glucose, Saccharose, Isomaltose oder Isomelezitose aufweist.

In einer bevorzugten Ausführungsform der Erfindung ist der Vorlagebehälter ein rotationsfähiger Vorlagebehälter, insbesondere ein geschlossener Vorlagebehälter. In besonderes bevorzugter Ausführungsform ist der Vorlagebehälter Thermo-regulierbar, beheizbar oder beides. In besonderes bevorzugter Ausführungsform ist der Vorlagebehälter mit einem Rührwerk ausgestattet und Thermo-regulierbar, beheizbar oder beides.

In einer bevorzugten Ausführungsform der Erfindung ist der Dragierbehälter ein rotationsfähiger Dragierbehälter, insbesondere ein Dragierkessel, insbesondere ein rotationsfähiger Dragierkessel oder Dragiertrommel, insbesondere ein offener Dragierkessel. In besonderes bevorzugter Ausführungsform ist der Dragierbehälter, insbesondere Dragierkessel, Thermo-regulierbar, beheizbar oder beides.

In einer bevorzugten Ausführungsform der Erfindung ist der Dragierbehälter, insbesondere Dragierkessel, exzentrisch gelagert. Bei einer exzentrischen Lagerung befindet sich die Drehachse des Kessels nicht im geometrischen Zentrum des Behälters, was zu einer ungleichmäßigen, aber effektiven Durchmischung der Süßwarenkerne führt. Diese Bauweise ermöglicht eine verbesserte Benetzung und gleichmäßigere Beschichtung der Partikel, da unterschiedliche Bewegungsbahnen entstehen und Totzonen minimiert werden.

In einer Ausführungsform kann auch ein zentrisch gelagerter Dragierbehälter, insbesondere Dragierkessel eingesetzt werden. Der Dragierbehälter kann bevorzugt zwiebelförmig sein.

In einer bevorzugten Ausführungsform der Erfindung wird der Dragierbehälter in Verfahrensschritt b) bewegt, insbesondere um eine Drehachse rotiert, so dass die Süßwarenkerne mechanisch agitiert werden, sich also in dem Dragierbehälter bewegen, insbesondere um die Drehachse des Dragierbehälters bewegt werden.

In bevorzugter Ausführungsform beträgt die Drehzahl des Dragierbehälters 3 bis 50, insbesondere 4 bis 25, insbesondere 4 bis 20, insbesondere 5 bis 15 Umdrehungen/Minute (U/min).

In einer bevorzugten Ausführungsform der Erfindung ist der Dragierbehälter, insbesondere Dragierkessel, so ausgerichtet, dass der Behälter, insbesondere Kessel oder Trommel, eine Neigung zur Drehachse des Dragierbehälters aufweist, insbesondere zu einer Drehachse um den Mittelpunkt des Behälters. Bevorzugt wird so erreicht, dass die zu dragierenden Produkte in verschiedenen Bereichen des Behälters mit unterschiedlichen Umlaufgeschwindigkeiten bewegt werden.

In bevorzugter Ausführungsform beträgt die Behälter-, insbesondere Kessel- oder Trommelneigung des Dragierbehälters 10 bis 50°, insbesondere von 20 bis 50°, insbesondere 22 bis 40°, insbesondere 25 bis 35 °.

In einer bevorzugten Ausführungsform der Erfindung wird in Verfahrensschritt b) die Isomaltulose-Dragierlösung unter einem Druck von mindestens 1, insbesondere mindestens 2, insbesondere mindestens 3, insbesondere mindestens 4 MPa, insbesondere mindestens 10 MPa, insbesondere mindestens 20 MPa eingesprüht. In einer bevorzugten Ausführungsform der Erfindung wird in Verfahrensschritt b) die Isomaltulose-Dragierlösung unter einem Druck von mindestens 3, insbesondere mindestens 4 MPa, insbesondere mindestens 5 MPa, insbesondere mindestens 10 MPa, insbesondere mindestens 20 MPa eingesprüht

In einer bevorzugten Ausführungsform der Erfindung wird in Verfahrensschritt b) die Isomaltulose-Dragierlösung unter einem Druck von 1 bis 5, insbesondere 2 bis 5, insbesondere 3 bis 5, insbesondere 4 bis 5 MPa eingesprüht. In einer bevorzugten Ausführungsform der Erfindung wird in Verfahrensschritt b) die Isomaltulose-Dragierlösung unter einem Druck von 3 bis 30, insbesondere 3 bis 20, insbesondere 3 bis 15, insbesondere 3 bis 10 MPa eingesprüht.

In einer bevorzugten Ausführungsform der Erfindung wird in Verfahrensschritt b) die Isomaltulose-Dragierlösung unter einem Druck 3 bis 4 MPa aufgesprüht.

In einer bevorzugten Ausführungsform der Erfindung weist die in Verfahrensschritt b) eingesprühte Isomaltulose-Dragierlösung eine Temperatur oberhalb, insbesondere mindestens 5 °C oberhalb, der Löslichkeitsgrenze der Isomaltulose in der Isomaltulose-Dragierlösung auf. Vorzugsweise ist die Isomaltulose oder das Isomaltulose-haltige Gemisch vollständig in der Dragierlösung gelöst.

In einer bevorzugten Ausführungsform der Erfindung beträgt die Temperatur der in Verfahrensschritt b) aufgesprühten Isomaltulose-Dragierlösung 60 bis 80 °C, insbesondere 60 bis 75 °C, insbesondere 65 bis 70 °C.

In einer bevorzugten Ausführungsform der Erfindung wird Verfahrensschritt b) bei einer Temperatur von 60 bis 80 °C, insbesondere 60 bis 75 °C, insbesondere 65 bis 70 °C durchgeführt.

In einer bevorzugten Ausführungsform der Erfindung ist vorgesehen, daß das gasförmige Trocknungsmedium ein Gasgemisch, insbesondere Luft, insbesondere Trocknungsluft, ist.

In einer bevorzugten Ausführungsform der Erfindung ist vorgesehen, daß das gasförmige Trocknungsmedium ein Gasgemisch, insbesondere Luft, insbesondere Trocknungsluft, eine relative Feuchtigkeit, insbesondere Luftfeuchtigkeit, von höchstens 60, insbesondere höchstens 50, insbesondere höchstens 40, insbesondere höchstens 30, insbesondere höchstens 25 % (jeweils relative Luftfeuchtigkeit bei 20 °C) aufweist.

In einer bevorzugten Ausführungsform der Erfindung ist vorgesehen, dass das gasförmige Trocknungsmedium, insbesondere die Trocknungsluft. eine Temperatur von 10 bis 90 °C, insbesondere 25 bis 80°C, insbesondere 55 bis 80 °C, insbesondere 60 bis 80 °C, insbesondere 60 bis 75 °C, insbesondere 65 bis 75 °C aufweist. Die Temperatur des gasförmigen Trocknungsmediums, insbesondere der Trocknungsluft, hängt auch von dem zu trocknenden Süßwarenkern ab. Sie kann auch bei 20 bis 30 °C, insbesondere bei 23 bis 27 °C liegen.

Der Volumenstrom des gasförmigen Trocknungsmediums, insbesondere der Trocknungsluft, in der Zuleitung kann bevorzugt von 100 bis 1000, insbesondere 200 bis 900, insbesondere 200 bis 300 m³/Stunde betragen.

Die Strömungsgeschwindigkeit des gasförmigen Trocknungsmediums, insbesondere der Trocknungsluft, in der Zuleitung kann bevorzugt von 1 bis 100, insbesondere 2 bis 90, insbesondere 4 bis 15 m³/Stunde betragen.

In einer bevorzugten Ausführungsform der Erfindung ist vorgesehen, dass in Verfahrensschritt b) die Isomaltulose-haltige Dragierlösung eine Temperatur von 60 bis 80 °C aufweist und unter Zufuhr von eine Temperatur von 10 bis 90 °C, insbesondere 25 bis 80 °C aufweisender Trocknungsluft eingesprüht wird.

In einer bevorzugten Ausführungsform der Erfindung ist vorgesehen, dass in Verfahrensschritt b) die Isomaltulose-haltige Dragierlösung eine Temperatur von 60 bis 80 °C aufweist und unter einem Druck von mindestens 1,00 MPa auf die bewegten Süßwarenkerne unter Zufuhr von eine Temperatur von 10 bis 90 °C, insbesondere 25 bis 80 °C aufweisender Trocknungsluft eingesprüht wird.

In einer bevorzugten Ausführungsform der Erfindung ist vorgesehen, dass in Verfahrensschritt b) mindestens ein Additiv als weitere Dragierkomponente eingesprüht wird, insbesondere auf die Süßwarenkerne aufgesprüht wird.

In einer bevorzugten Ausführungsform der Erfindung ist vorgesehen, dass das mindestens eine Additiv als Bestandteil der Isomaltulose-haltigen Dragierlösung eingesprüht wird, insbesondere auf die Süßwarenkerne aufgesprüht wird.

In einer besonders bevorzugten Ausführungsform betrifft die vorliegende Erfindung ein vorgenanntes Verfahren, wobei die in Verfahrensschritt a) bereitgestellte und in Verfahrensschritt b) eingesprühte Isomaltulose-haltige Dragierlösung höchstens 3, insbesondere höchstens 2, Massen-% des mindestens einen Additivs aufweist (jeweils bezogen auf Gesamtmasse der Dragierlösung).

In einer bevorzugten Ausführungsform der Erfindung ist vorgesehen, dass das mindestens eine Additiv vorverkleisterte Stärke oder ein Zuckerester, insbesondere Saccharoseester, ist.

In einer bevorzugten Ausführungsform der Erfindung ist vorgesehen, dass die Süßwarenkerne vor Durchführung von Verfahrensschritt b) in mindestens einem Verfahrensschritt x) mit einer Vorbeschichtung versehen werden. Die Vorbeschichtung kann aus mindestens einer, vorzugsweise zwei Vorbeschichtungsschichten aufgebaut sein. Die in Verfahrensschritt a) bereitgestellten, in Verfahrensschritt b) zu besprühenden Süßwarenkerne sind daher in bevorzugter Ausführungsform vorbeschichtete Süßwarenkerne.

Die in bevorzugter Ausführungsform vorgesehene Vorbeschichtung glättet vorteilhafter die Oberfläche der zu beschichtenden Süßwarenkerne und verhindert die Migration von Fettkomponenten aus den Süßwarenkernen in die Dragierdecke.

Erfindungsgemäß bevorzugt sind die gemäß Verfahrensschritt b) aufgebrachte Dragierdecke und die bevorzugt gemäß Verfahrensschritt x) aufgebrachte mindestens eine Vorbeschichtungsschicht die einzigen den mindestens einen Süßwarenkern umhüllende Beschichtungen.

In einer bevorzugten Ausführungsform der Erfindung ist vorgesehen, dass die Vorbeschichtung in Verfahrensschritt x) mindestens einen Verfahrensschritt x1) zum Beschichten der Süßwarenkerne mit einem Vorbeschichtungsmedium, mindestens einen Verfahrensschritt x2) zum Aufbringen einer pulverförmigen Komponente auf die in Verfahrensschritt x1) beschichteten Süßwarenkerne und mindestens einen Verfahrensschritt x3) zum Trocknen und Kristallisieren umfasst. Verfahrensschritte x1), x2) und x3) können mindestens einmal, zweimal oder vielmals durchgeführt werden und führen so zu einer, zwei oder vielen übereinander angeordneten Vorbeschichtungsschichten.

In einer bevorzugten Ausführungsform der Erfindung ist vorgesehen, dass das Vorbeschichtungsmedium eine wässrige Lösung oder Suspension ist, insbesondere eine wäßrige Lösung oder Suspension eines Isomaltulose-haltigen Gemisches ist, vorzugsweise in Kombination mit Stärke, insbesondere vorverkleisterter Stärke, insbesondere Reisstärke, insbesondere vorverkleisterter Reisstärke, Gummi arabikum oder einer Mischung von zwei oder mehreren davon.

In einer bevorzugten Ausführungsform der Erfindung ist vorgesehen, dass das Vorbeschichtungsmedium eine wässrige Lösung oder Suspension ist, insbesondere eine wäßrige Lösung oder Suspension eines Isomaltulose-haltigen Gemisches ist, vorzugsweise in Kombination mit Gummi arabikum oder mit Reisstärke insbesondere vorverkleisterter Reisstärke, oder mit beiden.

In einer bevorzugten Ausführungsform der Erfindung ist vorgesehen, dass das Vorbeschichtungsmedium eine wässrige Lösung eines Isomaltulose-haltigen Gemisches und vorverkleisterter Stärke, insbesondere Reisstärke, ist, wobei der Gehalt an Isomaltulose-haltigem Gemisch 50 bis 70 Massen-%, Wasser 30 bis 50 Massen-% und Stärke, insbesondere Reisstärke, 0 bis 3, vorzugsweise 0 bis 2 Massen-% (jeweils bezogen auf Gesamtmasse des Vorbeschichtungsmediums) beträgt.

In einer bevorzugten Ausführungsform der Erfindung ist vorgesehen, dass das Vorbeschichtungsmedium eine Isomaltulose-haltige Dragierlösung ist.

In einer bevorzugten Ausführungsform der Erfindung ist vorgesehen, dass die in Verfahrensschritt x2) aufgebrachte pulverförmige Komponente ein Pulver von Stärke, native Stärke oder vorverkleisterte Stärke, insbesondere Reisstärke, insbesondere native Reisstärke oder vorverkleisterte Reisstärke ist.

In einer bevorzugten Ausführungsform der Erfindung ist vorgesehen, dass die Vorbeschichtung in Verfahrensschritt x) bei einer Temperatur von 50 bis 75, insbesondere 55 bis 70, insbesondere 60 bis 65 °C durchgeführt wird, vorzugsweise bei einer Temperatur von 65 bis 75 °C.

In einer bevorzugten Ausführungsform der Erfindung ist vorgesehen, dass das in Verfahrensschritt x) eingesetzte Vorbeschichtungsmedium auch in Verfahrensschritt b) als Dragierlösung eingesetzt wird.

In einer bevorzugten Ausführungsform der Erfindung ist vorgesehen, dass der mindestens eine in Verfahrensschritt x) erhaltene vorbeschichtete Süßwarenkern höchstens 10,0 Massen-%, insbesondere höchstens 7,0, insbesondere höchstens 6,0, insbesondere höchstens 5,0 Massen-% Vorbeschichtungsschicht oder -schichten (bezogen auf Gesamtmasse des dragierten Süßwarenprodukts) umfasst.

In einer bevorzugten Ausführungsform der Erfindung ist vorgesehen, dass der mindestens eine in Verfahrensschritt x) erhaltene vorbeschichtete Süßwarenkern 0,1 bis 50 Massen-%, insbesondere 0,1 bis 40 Massen-%, insbesondere 0,1 bis 30 Massen-%, insbesondere 0,1 bis 20 Massen-%, insbesondere 0,5 bis 10,0 Massen-%, insbesondere 2,0 bis 7,0, insbesondere 3,0 bis 6,0, insbesondere 3,0 bis 5,0 Massen-% Vorbeschichtungsschicht oder -schichten (jeweils bezogen auf Gesamtmasse des dragierten Süßwarenprodukts) umfasst.

In einer bevorzugten Ausführungsform der Erfindung ist vorgesehen, dass das in Verfahrensschritt b) erhaltene dragierte Süßwarenprodukt mindestens 5 Massen-%, insbesondere von 5 bis 65 Massen-%, insbesondere 10 bis 65 Massen-%, insbesondere 15 bis 60 Massen-%, 15 bis 60 Massen-%, insbesondere 20 bis 60, insbesondere 30 bis 60, insbesondere 35 bis 60, insbesondere 40 bis 60 Massen-% Dragierdecke (jeweils bezogen auf Gesamtmasse des dragierten Süßwarenprodukts und ohne Berücksichtigung einer optional vorhandenen Vorbeschichtung) umfasst, wobei die Dragierdecke in einem einzigen kontinuierlich durchgeführten Verfahrensschritt b) aufgebracht wurde.

In einer bevorzugten Ausführungsform der Erfindung ist vorgesehen, dass das in Verfahrensschritt b) erhaltene dragierte Süßwarenprodukt mindestens 5 Massen-%, insbesondere von 5 bis 75 Massen-% , insbesondere von 5 bis 70 Massen-%, insbesondere 10 bis 70 Massen-%, insbesondere 15 bis 65 Massen-%, 15 bis 65 Massen-%, insbesondere 20 bis 65, insbesondere 30 bis 65, insbesondere 40 bis 65 Massen-% Dragierdecke (jeweils bezogen auf Gesamtmasse des dragierten Süßwarenprodukts und unter Einschluss einer optional vorhandenen Vorbeschichtung gemäß Verfahrensschritt x) umfasst.

In einer bevorzugten Ausführungsform der Erfindung ist vorgesehen, dass das in Verfahrensschritt b) erhaltene dragierte Süßwarenprodukt eine in Verfahrensschritt b) erhaltene Dragierdecke einer Dicke von 300 bis 1500 µm, insbesondere von 400 bis 1300 µm, insbesondere von 500 bis 1200 µm, insbesondere von 550 bis 1100 µm, insbesondere von 550 bis 700 µm aufweist, wobei die Dragierdecke in einem einzigen kontinuierlich durchgeführten Verfahrensschritt b) aufgebracht wurde. In einer bevorzugten Ausführungsform der Erfindung ist vorgesehen, dass das in Verfahrensschritt b) erhaltene dragierte Süßwarenprodukt eine in Verfahrensschritt b) erhaltene Dragierdecke einer Dicke von 300 bis 800 µm aufweist, wobei die Dragierdecke in einem einzigen kontinuierlich durchgeführten Verfahrensschritt b) aufgebracht wurde.

In einer bevorzugten Ausführungsform der Erfindung ist vorgesehen, dass die Süßwarenkerne Kaugummis, Karamellen, insbesondere Hartkaramellen oder Weichkaramellen, Nonpareilles, Schokolinsen, Saatgut, Nüsse, Mandeln, Samen oder Obst sind. Vorzugsweise sind die Nüsse Erdnüsse oder Haselnüsse.

In einer weiteren bevorzugten Ausführungsform kann vorgesehen sein, das in Verfahrensschritt b) erhaltene Süßwarenprodukt üblichen weiteren Prozessierungsschritten zu unterziehen, insbesondere einer Polierung und/oder einem Bewachsungsschritt.

Die vorliegende Erfindung betrifft daher auch Süßwarenprodukte, insbesondere erhältlich nach einem der Verfahren der vorliegenden Erfindung. umfassend mindestens einen eine Dragierdecke aufweisenden Süßwarenkern, wobei die, insbesondere in Verfahrensschritt b) aufgesprühte, Dragierdecke eine homogene, insbesondere keine geschichtete, Struktur aufweist.

Im Zusammenhang mit der vorliegenden Erfindung wird unter einem "Isomaltulose- und Trehalulose-haltigen Gemisch" ein Gemisch umfassend Isomaltulose und Trehalulose verstanden, insbesondere erhalten aus einer enzymatischen Umsetzung von Saccharose mittels einer Saccharose-Isomerase zu einem Saccharose-Isomerengemisch enthaltend Isomaltulose und Trehalulose, sowie, optional, eine oder mehrere weitere Substanzen ausgewählt aus der Gruppe bestehend aus Saccharose, Fructose, Glucose, Turanose, Leucrose, Isomaltose, Raffinose, Isomelezitose, 6-Gluc Isomalt und 1-Gluc Isomalt.

Im Zusammenhang mit der vorliegenden Erfindung wird unter "Stärke" insbesondere Stärke von Reis, Tapioka, Kartoffel, Mais, Weizen oder Erbse verstanden. Stärke kann als Wachs- oder nicht-Wachs-Stärke vorliegen. Stärke kann als vorverkleisterte oder nicht-vorverkleisterte Stärke vorliegen.

Im Zusammenhang mit der vorliegenden Erfindung wird unter einem "Süßwarenprodukt" ein Produkt verstanden, welches einen süßen Geschmack aufweist. Dieser Geschmack kann durch den Süßwarenkern und/oder durch eine Dragierdecke vermittelt werden.

Im Zusammenhang mit der vorliegenden Erfindung wird unter einem "Süßwarenkern" eine feste und/oder flüssige Zusammensetzung verstanden, welche süß oder nicht-süß sein kann.

Im Zusammenhang mit der vorliegenden Erfindung wird unter "mindestens einem Süßwarenkern" ein, zwei, mehrere oder viele Süßwarenkerne, insbesondere eine Vielzahl von Süßwarenkernen verstanden.

Im Zusammenhang mit der vorliegenden Erfindung wird unter "pulverförmig" ein fester, partikulärer Zustand verstanden.

Im Zusammenhang mit der vorliegenden Erfindung wird unter einer "Dragiermedium" und einem "Vorbeschichtungsmedium" ein Medium, insbesondere eine Lösung oder Suspension, insbesondere wässrige Lösung oder Suspension, insbesondere wäßrige Lösung, verstanden, die mindestens eine zum Dragieren oder Vorbeschichten vorgesehene Dragierkomponente, insbesondere einen Zucker, und ein Lösungsmittel umfasst.

Im Zusammenhang mit der vorliegenden Erfindung wird unter einer "Dragierkomponente" ein Stoff verstanden, der in einer Lösung vorliegt, die zum Dragieren eines Süßwarenkerns bestimmt ist, und der als nach Abtrocknen der Lösung auf dem Süßwarenkern als Feststoff, insbesondere kristalliner Feststoff vorliegt und die Dragierdecke ausbildet.

Im Zusammenhang mit der vorliegenden Erfindung wird unter einer "Dragierzuckerkomponente" eine Dragierkomponente verstanden, die ein Zucker ist.

Im Zusammenhang mit der vorliegenden Erfindung wird unter einer "Dragierlösung" insbesondere eine wässrige Lösung verstanden, die mindestens eine zum Dragieren vorgesehene Dragierkomponente, insbesondere einen Zucker, und ein Lösungsmittel umfasst.

Unter einer "Dragierschicht" wird eine Schicht von mehreren, einen Süßwarenkern umhüllende Schichten verstanden, welche erhalten wird durch Aufbringen eines Dragiermediums auf einen Süßwarenkern und anschließendes Auskristallisieren oder erhalten wird durch Aufbringen eines Dragiermediums auf einen Süßwarenkern und anschließendes Auskristallisieren und Aufstreuen einer pulverförmigen Zusammensetzung, das heißt die Dragierschicht umfasst die auf den Kern aufgebrachten und auskristallisierten Dragierkomponenten des Dragiermediums und eine optional darauf aufgestreute pulverförmige Zusammensetzung und ist Teil einer aus mehrerer oder vielen Schichten aufgebauten Umhüllung eines Süßwarenkerns.

Unter einem Zyklus wird das Durchführen einer sukzessiven Verfahrensabfolge der Schritte: Auftragen und Verteilen eines Dragiermediums, optionales Aufstreuen einer pulverförmigen Zusammensetzung, Kristallisation und optionales Trocknen unter Erhalt eine Dragierschicht verstanden.

Unter einer Phase wird eine Abfolge mindestens zweier unmittelbar aufeinanderfolgender Verfahrensschritte jeweils zum Erhalt einer Dragierschicht verstanden. Derartige Phasen weisen Zyklen mit identischen oder annähernd gleichen Parametern wie Auftragsmenge, Verteilzeit und/oder Kristallisation- und/oder Trocknungszeit auf.

Im Zusammenhang mit der vorliegenden Erfindung wird unter einer "Dragierdecke" eine homogene aus Dragierkomponenten aufgebaute Decke verstanden, die keine schichtartige Struktur, insbesondere keine einzelnen, insbesondere in Form von Zyklen, aufgebrachten Dragierschichten aufweist. Bevorzugt wird eine Dragierdecke erhalten durch Aufbringen eines Dragiermediums auf einen Süßwarenkern und gleichzeitiges Auskristallisieren.

Im Zusammenhang mit der vorliegenden Erfindung wird unter einem "kontinuierlichen Einsprühen der Isomaltulose-haltigen Dragierlösung in einen ersten Bereich des in Bewegung versetzten Dragierbehälters unter gleichzeitiger räumlich getrennter kontinuierlicher Zufuhr von gasförmigen Trocknungsmedium in einen zweiten Bereich des Dragierbehälters, verstanden, dass das Einsprühen von Dragierlösung und das Zuführen von Trocknungsluft gleichzeitig und permanent erfolgt, also weder ein sukzessives Durchführen von Auftragen und anschließendem Trocknen von Dragierlösung in zyklischer Abfolge noch ein phasenweises mehrfaches gleichzeitiges Aufbringen und Trocknen erfolgt. Das kontinuierliche Einsprühen und Trocknen findet erfindungsgemäß in einem einzigen Verfahrensgang statt und führt ohne Unterbrechung oder Zwischenschritte unmittelbar zu einer das erfindungsgemäße Produkt umhüllenden Dragierdecke, deren Masse vorzugsweise mindestens 5 Massen-% der Gesamtmasse des Süßwarenprodukts beträgt. Während dieses Verfahrensschrittes findet weder ein alleiniges Trocknen noch ein alleiniges Aufsprühen von Dragierlösung auf die Süßwarenkerne statt, sondern ein gemeinsames Trocknen und Aufsprühen. Während dieses Verfahrens wird eine Dragierdecke erhalten durch Aufbringen eines Dragiermediums auf einen Süßwarenkern und gleichzeitiges Auskristallisieren. Während dieses Verfahrensschrittes findet bevorzugt auch kein Aufbringen einer pulverförmigen Komponente (auch "dry charge", Trockencharge oder Abstreupulver genannt) statt.

Der "erste Bereich des Dragierbehälters" ist der dreidimensionale Bereich im Dragierbehälter, in den die Dragierlösung eingeleitet wird und der auch als erstes Kompartiment des Dragierbehälters bezeichnet werden kann. Der "zweite Bereich des Dragierbehälters" ist der dreidimensionale Bereich im Dragierbehälter, in den das gasförmige Trocknungsmedium eingeleitet wird und der auch als zweites Kompartiment des Dragierbehälters bezeichnet werden kann. Sofern, wie erfindungsgemäß bevorzugt vorgesehen, sich der Dragierbehälter in Verfahrensschritt b) relativ zu der Sprühvorrichtung zum Einsprühen der Dragierlösung und zu dem Lüftungssystem zur Zufuhr das gasförmigen Trocknungsmediums bewegt, insbesondere rotiert, und insbesondere die Sprühvorrichtung und das Lüftungssystem sich nicht mit dem Dragierbehälter mit bewegen, bleibt die Position des ersten und zweiten Bereichs im Raum in Relation zur Sprühvorrichtung und Lüftungssystem konstant, während sich der Dragierbehälter mit den in ihm befindlichen Süßwarenkernen relativ zu den räumlich fixierten ersten und zweiten Bereich bewegt, so dass die Süßwarenkerne diese sukzessive durchlaufen können.

Im Zusammenhang mit der vorliegenden Erfindung wird die Zusammensetzung von kohlenhydrathaltigen Präparationen mittels Gaschromatographie (GC) bestimmt, sofern nicht explizit anders angegeben

Im Zusammenhang mit der vorliegenden Erfindung bedeutet die Wortfolge "unmittelbar vor" oder "unmittelbar nach" in Bezug auf zwei miteinander in Bezug gebrachte Verfahrensschritte, dass die beiden in Bezug gebrachten Verfahrensschritte zeitlich zueinander gestaffelt durchgeführt werden, und zwar so, dass zwischen den beiden Verfahrensschritten keine Zwischenschaltung eines oder mehr als eines Verfahrensschrittes erfolgt.

Im Zusammenhang mit der vorliegenden Erfindung bedeutet die Wortfolge "und/oder", dass alle Mitglieder einer Gruppe, welche durch den Begriff "und/oder" verbunden sind, sowohl alternativ zueinander als auch jeweils untereinander kumulativ in einer beliebigen Kombination offenbart sind. Exemplarisch bedeutet dies für den Ausdruck "A, B und/oder C", dass folgender Offenbarungsgehalt darunter zu verstehen ist: i) (A oder B oder C), oder ii) (A und B), oder iii) (A und C), oder iv) (B und C), oder v) (A und B und C).

Sofern im Zusammenhang mit der vorliegenden Erfindung in einer Zahl die erste und zweite Nachkommastelle oder die zweite Nachkommastelle nicht angegeben sind/ist, sind/ist diese als Null zu setzen.

Sofern im Zusammenhang mit der vorliegenden Erfindung quantitative Angaben, insbesondere Prozentangaben, von Komponenten eines Produktes oder einer Zusammensetzung angegeben sind, addieren diese, sofern nicht explizit anders angegeben oder fachmännisch ersichtlich, zusammen mit den anderen explizit angegebenen oder fachmännisch ersichtlichen weiteren Komponenten der Zusammensetzung oder des Produktes auf 100 % der Zusammensetzung und/oder des Produktes auf.

Sofern im Zusammenhang mit der vorliegenden Erfindung ein "Vorhandensein", ein "Enthalten" oder ein "Aufweisen" einer Komponente in einer Menge von 0 Massen-% ausdrücklich erwähnt oder impliziert wird, bedeutet dies, dass die jeweilige Komponente nicht in messbarer Menge vorhanden, insbesondere nicht vorhanden ist.

Im Zusammenhang mit der vorliegenden Erfindung wird unter den Begriffen "umfassend" und "aufweisend" verstanden, dass zusätzlich zu den von diesen Begriffen explizit erfassten Elementen noch weitere, nicht explizit genannte Elemente hinzutreten können. Im Zusammenhang mit der vorliegenden Erfindung wird unter diesen Begriffen auch verstanden, dass allein die explizit genannten Elemente erfasst werden und keine weiteren Elemente vorliegen. In dieser besonderen Ausführungsform ist die Bedeutung der Begriffe "umfassend" und "aufweisend" gleichbedeutend mit dem Begriff "bestehend aus". Darüber hinaus erfassen die Begriffe "umfassend" und "aufweisend" auch Zusammensetzungen, die neben den explizit genannten Elementen auch weitere nicht genannte Elemente enthalten, die jedoch von funktioneller und qualitativ untergeordneter Natur sind. In dieser Ausführungsform sind die Begriffe "umfassend" und "aufweisend" gleichbedeutend mit dem Begriff "im Wesentlichen bestehend aus".

Weitere vorteilhafte Ausgestaltungen ergeben sich aus den Unteransprüchen.

Die Erfindung wird anhand der nachfolgenden Figuren und der Beispiele näher erläutert.

Die Figuren zeigen:
Figur 1 eine schematische Darstellung der Dragierlösungs- und Trocknungsluftzufuhr in eine rotierende Motor-angetriebene Dragiertrommel,
Figur 2 eine schematische Darstellung der sich in der Dragiertrommel ausbildenden Auftrags-/Verteilzone und Trocknungs-Kristallisationszone,
Figur 3 erfindungsgemäß beschichtete Mandeln,
Figur 4 erfindungsgemäß beschichtete Mandeln in gebrochener Form,
Figur 5A ein digitales, mikroskopisches Foto einer unbeschichteten Schokolinse im Querschnitt
Figur 5B ein digitales, mikroskopisches Foto einer vorbeschichteten (Palatinose^{™} und Remyline AXFGP) Schokolinse im Querschnitt,
Figur 5C ein digitales, mikroskopisches Foto einer Schokolinse mit Dragierdecke (Palatinose^{™}) ohne Vorbeschichtung im Querschnitt,
Figur 5D ein digitales, mikroskopisches Foto einer mit Dragierdecke (Palatinose^{™}) und Vorbeschichtung (Palatinose^{™} und Remyline AXFGP) versehene Schokolinse im Querschnitt,
Figur 6A und 6B ein schematisches (6A) und ein rasterelektronenmikroskopisches (SEM) Foto (6B) einer schichtartig aufgebauten, Dragierdecke (Isomalt) eines Kaugummis im Querschnitt, und
Figur 6C und 6D ein schematisches (6C) und ein digitales, mikroskopisches Foto (6D) einer Isomaltulose (Palatinose^{™})-beschichteten Schokolinse gemäß der vorliegenden Erfindung im Querschnitt.

### Beispiel 1: Isomaltulose-Beschichtung von gerösteten Mandeln

### Material und Methoden:

Gabler Laboratory Spraying System Type LSP-U mit Hochdruckdüse
Offener drehbarer Dragierkessel, Zwiebelform, (Dragierbehälter)
Heizbarer Lüfter (Brucks Air-Blower)
Drehbarer Temperatur-regulierbarer und beheizter geschlossener Vorlagebehälter
Süßwarenkerne: geröstete Mandeln (Lemke, Berlin, Deutschland)

### Dragierlösung:

60 Massen-% Isomaltulose- und Trehalulose-haltige Mischung (z. B. Palatinose^{™} PST N; Isomaltulose: 93,8 %, Trehalulose: 0,43%, Saccharose: 0.01 %, Glucose: 0,04 %, Fructose: 0,06 % und Wasser: 5,1 %, jeweils Massen-%, bezogen auf Isomaltulose und Trehalulose-haltige Mischung)
39 Massen-% Wasser (demineralisiert)
1 Massen. -% vorverkleisterte Wachs-Reisstärke (z. B. Remyline AXFGP)

### (Massen-% jeweils in Bezug auf Gesamtmasse der Lösung)

### Trockencharge:

| | |
|---|---|
| 90 Massen -% | pulverförmige Reisstärke (Remy DR) |
| 10 Massen. -% | vorverkleisterte Wachs-Reisstärke (z. B. Remyline AXFGP) |

### (Massen-% jeweils in Bezug auf Gesamtmasse der Trockencharge)

Die Dragierlösung wird auf eine Temperatur von 65 °C erwärmt. Mittels eines Viskotesters (Hydramotion) wurde bei einer Temperatur von 59,2 °C eine Viskosität von 14.9 mPas festgestellt.

### Verfahrensschritt x) - Vorbeschichtung der Mandeln

- Gießen von 150 g Dragierlösung auf das im offenen drehbaren Dragierkessel rotierende (15 - 20 U/min) Mandelbett (6 kg ungeröstete Mandeln) (Verfahrensschritt x1))
- gleichmäßige Verteilung des Dragierlösung (Verfahrensschritt x1))
- Bestreuen mit 250 g der Trockencharge (trockenes Beschichtungspulver) und abwarten, bis sich diese gleichmäßig verteilt hat (Verfahrensschritt x2))
- finale Trocknung und Kristallisation des gesamten Dragierkesselinhalts über einen Zeitraum von 5 min. (Verfahrensschritt x3))
- Dieser Vorgang (Gießen bis Trocknung) wird ein zweites Mal durchgeführt.
- Die gesamte 2-stufige Vorbeschichtung wird über einen Zeitraum von 15 min (Minuten) bei 65 °C durchgeführt.
- Die vorbeschichteten Mandeln sind vor der folgenden kontinuierlichen Beschichtung trocken.

### Verfahrensschritte a) und b) - Phase der kontinuierlichen Beschichtung

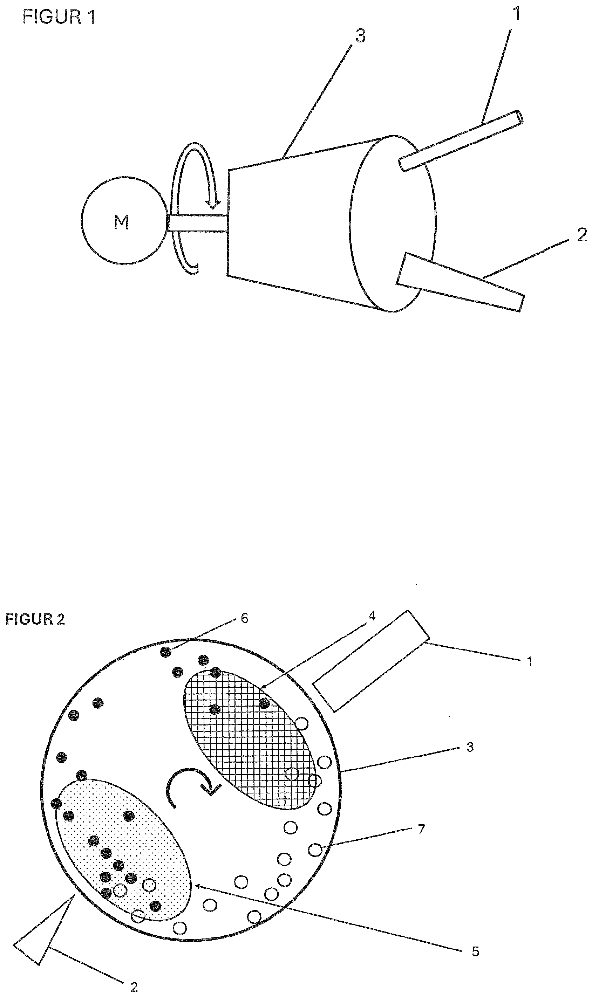

- Zunächst werden der drehbare, Motor (M)-angetriebene Dragierkessel 3 (Figur 1), in der die Vorbeschichtung gemäß Verfahrensschritt x) stattgefunden hat und in der sich die vorbeschichteten Mandeln befinden, und die Rohrleitungen des Sprühsystems mit Wasser gespült, um sicherzustellen, dass alle Verunreinigungen entfernt werden.
- Dann wird die vorbereitete Dragierlösung bei einer Arbeitstemperatur von 65 °C über ein Haarsieb in einen Vorlagebehälter eingefüllt und von der Pumpe des Sprühsystems so lange gepumpt, bis am Ausgang der Hochdruckdüse 2 eine Trockensubstanz von ca. 60 Gew.-% festgestellt wird.
- Durch Einschalten der drei Heizungen der Sprühvorrichtung (70 °C) und Einstellung des Betriebsdrucks auf 3,3 MPa wird das System aktiviert. Der Dragierkessel 3 wird in Rotation versetzt (15 bis 20 U/min).
- Aktivieren des Luftgebläses auf eine Temperatur von 60 °C und Positionieren des aus der Zuleitung 1 austretenden Trocknungsluftstrahls auf eine im oberen Bereich des Dragierkessels 3 vorliegende Trocknungs- und Kristallisationszone 4.
- Positionieren des dafür vorgesehenen Staub-Absaugarms mittig über dem Dragierkessel 3, bei maximaler Absaugleistung.
- Sprühwinkel und Durchflussmenge der Düse 2 für die Dragierlösung manuell mit der Rändelmutter regulieren, damit die Mandeln sehr gut durch die Trommel rotieren und nicht übermäßig benetzt werden.
   Es wird, unter Nutzung eines Vorfiltersystems, mit einem Druck von 3,3 MPa und einer Durchflussmenge an Dragierlösung von 143 g/min durch das beheizte Zufuhrsystem (60 bis 70 °C) eingesprüht. Verfahrensschritt b) findet bei 60 bis 70 °C statt.
   Die Dragierlösung ist in eine von der Trocknungs- und Kristallisationszone 4 räumlich getrennte Auftrags- und Verteilzone 5 zu lenken.
- Sprühen der Dragierlösung mit 3,3 MPa und Trocknen mit Trocknungsluft werden gleichzeitig und kontinuierlich über einen Zeitraum von 20 min durchgeführt. Die im Dragierkessel 3 vorliegenden rotierenden, vorbeschichteten Mandeln durchlaufen kontinuierlich nacheinander die räumlich getrennten Auftrags- und Verteilzone 5 und Trocknungs- und Kristallisationszone 4, wobei eine homogen ausgebildete, keinerlei Schichtstruktur aufweisende Isomaltulose-Dragierdecke oberhalb der Vorbeschichtung ausgebildet wird. Figur 2 zeigt schematisch, dass die Mandeln in der Auftrags- und Verteilzone 5 mit Dragierlösung besprüht und dementsprechend feucht werden (schwarz dargestellte Kreise zeigen feuchte Mandelkerne 6) und sich dann aufgrund der Rotation des Dragierkessels relativ zu der Zuleitung 1 und der Düse 2 in die Trocknungs- und Kristallisationszone 4 bewegen, in der sie getrocknet werden (nicht ausgefüllt dargestellte Kreise zeigen trockene Mandelkerne 7). Dieser Vorgang aus kombiniertem, allerdings räumlich getrenntem Besprühen und Trocknen der Mandeln wiederholt sich im Laufe des Verfahrensschrittes b) mehrmals in Abhängigkeit von Verfahrensdauer und Drehzahl des Dragierbehälters.

Aus Figur 2 ist erkennbar, dass im Dragierkessel 3 durch die in Figur 1 erkennbare getrennte Zuführung von Dragierlösung aus der Hochdruckdüse 2 (und einem nicht dargestellten, der Düse vorgelagerten Vorlagebehälter) und der Trocknungsluft aus der Luftzuleitung/Luftgebläse 1 im Dragierkessel 3 zwei räumlich getrennte Bereich entstehen, nämlich eine feuchte Auftrags- und Verteilzone 5, in die die Isomaltulose-haltige Dragierlösung auf die dort bei Rotation des Dragierkessels 3 zeitweise vorliegenden Süßwarenkerne 6, 7 aufgesprüht wird, und eine trockene Trocknungs- und Kristallisationszone 4, in die die Trocknungsluft auf die dort bei Rotation des Dragierkessels 3 zeitweise vorliegenden Süßwarenkerne 6, 7 geblasen wird.

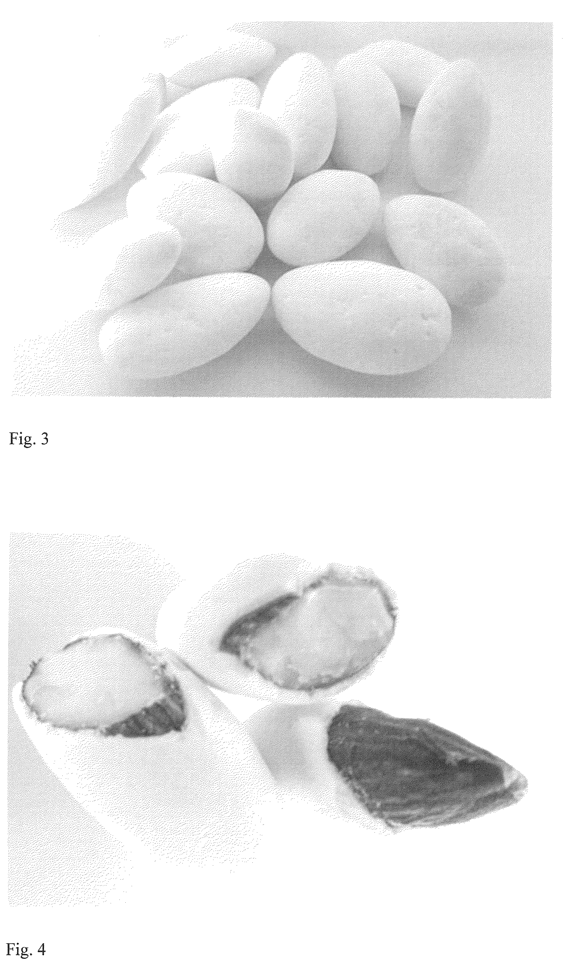

In einem einzigen kontinuierlich durchgeführten gleichzeitig Sprüh- und Trocknungsschritt b) wurde so eine einheitlich aufgebaute Dragierdecke bereitstellt, deren Massenanteil an der Gesamtmasse des beschichteten Süßwarenkerns 40 Massen-% (bezogen auf Gesamtmasse des Süßwarenkerns) betrug (Figuren 3 und 4).

Für das Aufbringen eines identischen Gewichtsanteils an Dragierdecke in einem vergleichsweise durchgeführten zyklischen Dragierverfahren (Driacoater 500/600 Vario) auf vorbeschichtete Mandeln mit der sukzessiven Prozessfolge: Aufbringen, Verteilen, Trocken und Kristallisieren wurden 320 min benötigt.

Die durchgeführten Versuche zeigen, dass es möglich ist, Isomaltulose, optional in Kombination mit Additiven wie Quellstärke und/oder Zuckerester, dauerhaft in einen rotierenden Dragierkessel zu sprühen und gleichzeitig die Kristallisation und Trocknung durchzuführen und so eine Beschichtung zu erhalten, die von dünnen Schichten wie Vorbeschichtungen oder Farbbeschichtungen bis hin zu dickeren Überzügen (vergleichbar zu klassisch-konventionell hergestellten Dragierdecken mit bis zu 100 separaten Schichten) reicht und aufgrund der aufgebrachten Dragierdecke eine Massenzunahme von 50 % bis 60 % ermöglicht.

Die so hergestellten dragierten Mandeln wiesen eine verbesserte Knusprigkeit gegenüber konventionell hergestellten Produkten auf.

### Beispiel 2: Isomaltulose-Beschichtung von Schokolinsen

### Material und Methoden:

Gabler Laboratory Spraying System Type LSP-U mit Hochdruckdüse
Offener drehbarer Dragierkessel, Zwiebelform, (Dragierbehälter)
Heizbarer Lüfter (Brucks Air-Blower)
Drehbarer Temperatur-regulierbarer und beheizter geschlossener Vorlagebehälter
Süßwarenkerne: Schokolinsen (Gesamtmasse aller Schokolinsen: 3000 g, Masse pro Schokolinse: 0,56 g, Dicke der Linse: 4,39 mm, Krümmungsradius wie optische Standardlinse, Durchmesser der Linse: 13,58 mm, Oberfläche der gesamten Schokolinsen: 1177,5 cm²)

### Dragierlösung:

60 Massen-% Isomaltulose- und Trehalulose-haltige Mischung (z. B. Palatinose^{™} PST N; Isomaltulose: 93,8 %, Trehalulose: 0,43%, Saccharose: 0.01 %, Glucose: 0,04 %, Fructose: 0,06 % und Wasser: 5,1 %, jeweils Massen-%, bezogen auf Isomaltulose und Trehalulose-haltige Mischung)
40 Massen-% Wasser (vollentsalzt, VE)

### (Massen-% jeweils in Bezug auf Gesamtmasse der Lösung)

Die Dragierlösung wird auf eine Temperatur von 65 bis 75 °C erwärmt.

### Verfahrensschritte a) und b) - Phase der kontinuierlichen Beschichtung

- Die Schokolinsen werden in den drehbaren Dragierkessel 3 (Figur 1) eingebracht.
- Dann wird die vorbereitete Dragierlösung bei einer Arbeitstemperatur von 65 bis 75 °C über ein Haarsieb in den gerührten und beheizten Vorlagebehälter eingefüllt und von der Pumpe des Sprühsystems so lange gepumpt, bis am Ausgang der Hochdruckdüse 2 eine Trockensubstanz von ca. 60 Gew.-% festgestellt wird.
- Durch Einschalten der drei Heizungen der Sprühvorrichtung (70 °C) und Einstellung des Betriebsdrucks auf 3,3 MPa wird das System aktiviert. Der Dragierkessel 3 wird in Rotation versetzt (5 bis 15 U/min). Die Trommelneigung beträgt 25 bis 35°.
- Aktivieren des Luftgebläses auf eine Temperatur von 23 bis 27 °C, einen Volumenstrom von 250 m³/Stunde und eine Strömungsgeschwindigkeit von 10 m/s und Positionieren des aus der Zuleitung 1 austretenden Trocknungsluftstrahls auf eine im oberen Bereich des Dragierkessels 3 vorliegende Trocknungs- und Kristallisationszone 4.
- Positionieren des dafür vorgesehenen Staub-Absaugarms mittig über dem Dragierkessel 3, bei maximaler Absaugleistung.
   Sprühwinkel und Durchflussmenge der Düse 2 für die Dragierlösung werden manuell mit der Rändelmutter reguliert, damit die Schokolinsen sehr gut durch die Trommel rotieren und nicht übermäßig benetzt werden. Es wird, unter Nutzung eines Vorfiltersystems, mit einem Druck von 3,3 MPa und einer Durchflussmenge an Dragierlösung von 145 g/min durch beheizte Zufuhrsystem (70 bis 75 °C) eingesprüht. Verfahrensschritt b) findet bei 65 bis 75 °C statt.
- Die Dragierlösung ist in eine von der Trocknungs- und Kristallisationszone 4 räumlich getrennte Auftrags- und Verteilzone 5 zu lenken.
- Sprühen der Dragierlösung und Trocknen mit Trocknungsluft werden gleichzeitig und kontinuierlich über einen Zeitraum von 20 min durchgeführt. Die im Dragierkessel 3 vorliegenden rotierenden, vorbeschichteten Schokolinsen durchlaufen kontinuierlich nacheinander die räumlich getrennten Auftrags- und Verteilzone 5 und Trocknungs- und Kristallisationszone 4, wobei eine homogen ausgebildete, keinerlei Schichtstruktur aufweisende Isomaltulose-Dragierdecke ausgebildet wird (vgl. Figur 2).
- Der Massenzuwachs pro Oberfläche der Schokolinse und Sprühzeit gemäß Verfahrensschritt b) betrug 0,331 g/min pro cm² und, bezogen auf den gesamten Batch (3000 g), 87 g/min pro cm².

Zusätzlich zu der vorstehend dargestellten Herstellung von dragierten, nicht-vorbeschichteten Schokolinsen gemäß der Verfahrensschritte a) und b) wurden gemäß Verfahrensschritt x) vorbeschichtete Schokolinsen (Vorbeschichtung mit Palatinose^{™} und Remyline AXFGP) hergestellt und anschließend Verfahrensschritte a) und b) gemäß Beispiel 2 durchgeführt.

In Verfahrensschritt x) wurde die vorstehend in Beispiel 2 beschriebene Dragierlösung mit Trockencharge (Abstreupulver) Remyline AXFGP entsprechend der Verfahrensbeschreibung für Verfahrensschritt x) in Beispiel 1 verwendet, wobei die Prozesszeit 15 min betrug und auf 6000 g Schokolinsen in zwei Beschichtungsvorgängen jeweils 250 g (gesamt also 500 g Dragierlösung) und jeweils 225 g Abstreupulver (gesamt also 450 g) aufgetragen wurden.

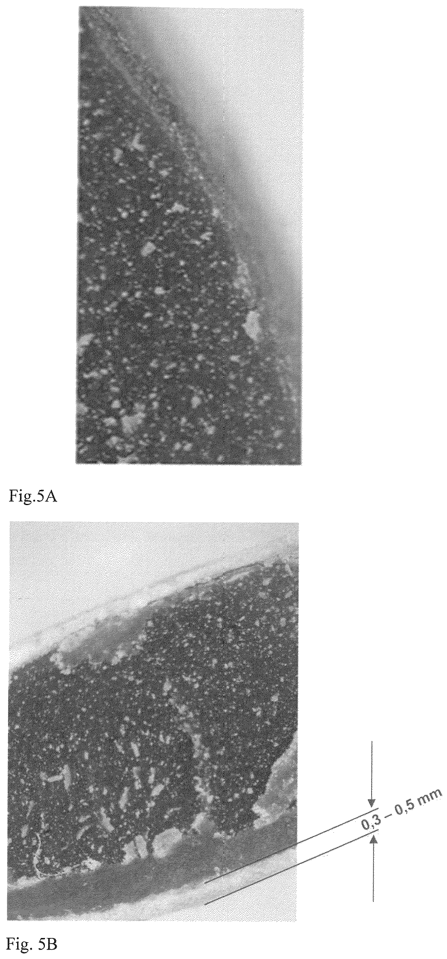

Figur 5A zeigt ein digitales, mikroskopisches Foto der unbeschichteten Schokolinse im Querschnitt.

Figur 5B zeigt ein digitales, mikroskopisches Foto der optional gemäß Verfahrensschritt x) (Vorbeschichtungsmedium aufgebracht vor Durchführung von Verfahrensschritten a) und b)) vorbeschichteten (Palatinose^{™} und Remyline AXFGP) Schokolinse im Querschnitt. Die Dicke der Vorbeschichtung beträgt 0,3 bis 0,5 mm.

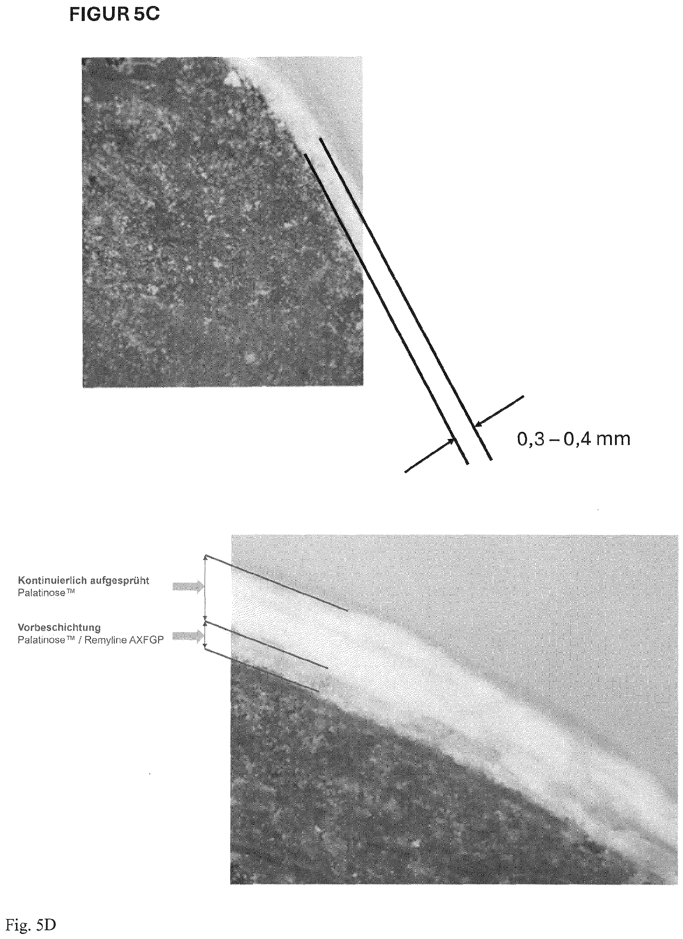

Figur 5C zeigt ein digitales, mikroskopisches Foto der Schokolinse gemäß der Verfahrensschritte a) und b) mit Dragierdecke (Palatinose^{™}) ohne Vorbeschichtung im Querschnitt. Die Dicke der Dragierdecke beträgt 0,3 bis 0,4 mm.

Figur 5D zeigt ein digitales, mikroskopisches Foto der mit Dragierdecke (Palatinose^{™}) und Vorbeschichtung (Palatinose^{™} und Remyline AXFGP) versehenen Schokolinse im Querschnitt.

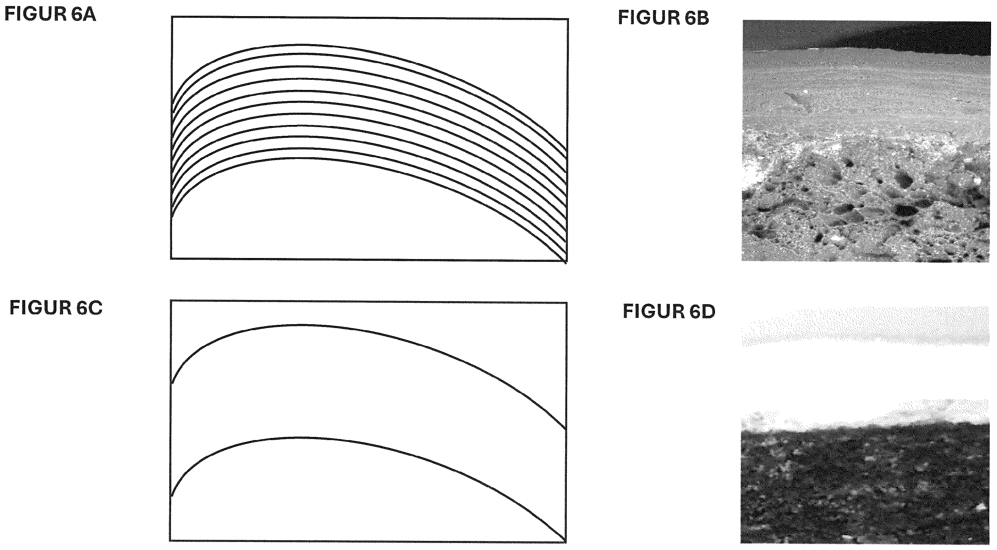

Figur 6B zeigt ein rasterelektronenmikroskopisches (SEM) Foto einer nicht erfindungsgemäßen schichtartig aufgebauten Dragierdecke (Dicke: 610 µm) aus Isomalt eines Kaugummis im Querschnitt. Figur 6A stellt eine schematische Darstellung des Schichtaufbaus dar. Figur 6D zeigt im Vergleich dazu ein digitales, mikroskopisches Foto einer Isomaltulose (Palatinose^{™})-beschichteten Schokolinse gemäß der vorliegenden Erfindung mit homogener Dragierdecke (Dicke: 580 bis 620 µm). Figur 6C stellt eine schematische Darstellung des homogenen nicht geschichteten Aufbaus der Dragierdecke dar.

Der Massenzuwachs der erfindungsgemäß hergestellten Schokolinsen ist in der Tabelle dargestellt:

**Tabelle**

| Zeit (min) | Batch Schokolinsen (g) | Massenzuwachs in % |
|---|---|---|
| 0 | 3000 | 0 |
| 5 | 3311 | 10,4 |
| 10 | 3641 | 21,4 |
| 20 | 4195 | 39,8 |

In einem einzigen kontinuierlich und gleichzeitig durchgeführten kombinierten Sprüh- und Trocknungsschritt b) wurde so in 20 Minuten eine einheitlich aufgebaute Dragierdecke bereitstellt, deren Massenanteil an der Gesamtmasse der beschichteten Süßwarenkerne 40 Massen-% (bezogen auf Gesamtmasse der Süßwarenkerne) betrug (Figuren 5 und 6). Die so hergestellten dragierten Schokolinsen wiesen eine verbesserte Knusprigkeit gegenüber konventionell hergestellten Produkten auf.

## Patentansprüche

1. Verfahren zur Herstellung eines eine Dragierdecke aufweisenden Süßwarenprodukts, umfassend die folgenden Verfahrensschritte:
a) Bereitstellen mindestens eines Süßwarenkerns in einem bewegbaren Dragierbehälter und einer in einem Vorlagebehälter befindlichen Isomaltulose-haltigen Dragierlösung und
b) kontinuierliches Einsprühen der Isomaltulose-haltigen Dragierlösung aus dem Vorlagebehälter in einen ersten Bereich des in Bewegung versetzten Dragierbehälters unter gleichzeitiger räumlich getrennter kontinuierlicher Zufuhr von gasförmigen Trocknungsmedium in einen zweiten Bereich des Dragierbehälters, so dass auf dem mindestens einen Süßwarenkern unter einem Massenzuwachs des mindestens einen Süßwarenkerns von mindestens 5 Massen-% (bezogen auf Gesamtmasse des dragierten Süßwarenprodukts) eine Dragierdecke ausgebildet wird.

2. Verfahren nach Anspruch 1, wobei in Verfahrensschritt b) die aufgesprühte Isomaltulose-Dragierlösung unter einem Druck von mindestens 1,00 MPa eingesprüht wird.

3. Verfahren nach einem der Ansprüche 1 oder 2, wobei das in Verfahrensschritt b) erhaltene dragierte Süßwarenprodukt eine in Verfahrensschritt b) erhaltene Dragierdecke einer Dicke von 100 bis 1500 µm, insbesondere von 300 bis 1500 µm, insbesondere von 400 bis 1300 µm, insbesondere von 500 bis 1200 µm, insbesondere von 550 bis 1100 µm, insbesondere von 550 bis 700 µm aufweist.

4. Verfahren nach einem der vorhergehenden Ansprüche, wobei Verfahrensschritt b) so durchgeführt wird, dass 0,1 bis 0,7 g Massenzuwachs pro Minute und cm² zu beschichtender Oberfläche des mindestens einen Süßwarenkerns erzielt wird.

5. Verfahren nach einem der vorhergehenden Ansprüche, wobei die aufgesprühte Isomaltulose-haltige Dragierlösung einen Trockensubstanzgehalt von 55 bis 65 Massen-% aufweist.

6. Verfahren nach einem der vorhergehenden Ansprüche, wobei das gasförmige Trocknungsmedium Trocknungsluft ist und eine relative Luftfeuchtigkeit von höchstens 25 % (bei 20 °C) aufweist.

7. Verfahren nach einem der vorhergehenden Ansprüche, wobei in Verfahrensschritt b) die Isomaltulose-Dragierlösung eine Temperatur von 60 bis 80 °C aufweist und unter Zufuhr von eine Temperatur von 10 bis 90 °C aufweisendem gasförmigen Trocknungsmedium eingesprüht wird.

8. Verfahren nach einem der vorhergehenden Ansprüche, wobei in Verfahrensschritt b) mindestens ein Additiv als Bestandteil der Isomaltulose-haltigen Dragierlösung eingesprüht wird.

9. Verfahren nach Anspruch 8, wobei das mindestens eine Additiv vorverkleisterte Stärke oder ein Zuckerester ist.

10. Verfahren nach einem der vorhergehenden Ansprüche, wobei die Süßwarenkerne vor Durchführung von Verfahrensschritt b) in mindestens einem Verfahrensschritt x) mit einer Vorbeschichtung versehen werden.

11. Verfahren nach Anspruch 10, wobei die Vorbeschichtung in Verfahrensschritt x) mindestens einen Verfahrensschritt x1) zum Beschichten der Süßwarenkerne mit einem Vorbeschichtungsmedium, mindestens einen Verfahrensschritt x2) zum Aufbringen einer pulverförmigen Komponente auf die in Verfahrensschritt x1) beschichteten Süßwarenkerne und mindestens einen Verfahrensschritt x3) zum Trocknen und Kristallisieren umfasst.

12. Verfahren nach einem der vorhergehenden Ansprüche 10 oder 11, wobei das Vorbeschichtungsmedium eine wässrige Lösung oder Suspension ist, insbesondere eine wäßrige Lösung oder Suspension einer Isomaltulose-haltigen Gemisches ist, vorzugsweise in Kombination mit Gummi arabikum oder mit vorverkleisterter Stärke oder mit beiden.

13. Verfahren nach einem der vorhergehenden Ansprüche, wobei das in Verfahrensschritt b) erhaltene dragierte Süßwarenprodukt 5 bis 60 Massen-% Dragierdecke (bezogen auf Gesamtmasse des dragierten Süßwarenprodukts) umfasst.

14. Verfahren nach einem der vorhergehenden Ansprüche, wobei die Süßwarenkerne Kaugummis, Schokolinsen, Karamellen, Nonpareilles, Saatgut, Nüsse, Mandeln, Samen oder Obst sind.

15. Süßwarenprodukt, insbesondere erhältlich nach einem der Verfahren der Ansprüche 1 bis 14, umfassend mindestens einen eine Dragierdecke aufweisenden Süßwarenkern, wobei die in Verfahrensschritt b) aufgesprühte Dragierdecke keine geschichtete Struktur aufweist.
